Europäisches Patentamt

(19) European Patent Office

Office européen des brevets

(11) Publication number: **0 185 058 B1**

# EUROPEAN PATENT SPECIFICATION

(45) Date of publication of patent specification: **09.10.91**  (51) Int. Cl.⁵: **H01B 3/30, C08L 75/04**

(21) Application number: **85902896.1**

(22) Date of filing: **29.05.85**

(86) International application number:
**PCT/US85/00998**

(87) International publication number:
**WO 86/00166 (03.01.86 86/01)**

(54) **ENCAPSULATING COMPOUND AND ARTICLES COMPRISING SAME.**

(30) Priority: **15.06.84 US 621083**
**01.05.85 US 728465**

(43) Date of publication of application:
**25.06.86 Bulletin 86/26**

(45) Publication of the grant of the patent:
**09.10.91 Bulletin 91/41**

(84) Designated Contracting States:
**BE DE FR GB IT NL SE**

(56) References cited:
| | |
|---|---|
| GB-A- 2 014 595 | US-A- 4 008 197 |
| US-A- 4 029 626 | US-A- 4 171 998 |
| US-A- 4 176 239 | US-A- 4 355 130 |
| US-A- 4 375 521 | US-E- 30 321 |

(73) Proprietor: **AMERICAN TELEPHONE AND TELEGRAPH COMPANY**
**550 Madison Avenue**
**New York, NY 10022(US)**

(72) Inventor: **CHAPIN, John, Thomas**
**8745 Lake Glen Court**
**Alpharetta, GA 30201(US)**
Inventor: **SABIA, Raffaele, Antonio**
**785 Sudbury Road**
**Atlanta, GA 30328(US)**

(74) Representative: **Johnston, Kenneth Graham et al**
**AT&T (UK) LTD. AT&T Intellectual Property Division 5 Mornington Road**
**Woodford Green Essex, IG8 OTU(GB)**

## Description

Field of the Invention

This invention relates in general to compounds for protecting matter from hostile ambients by encapsulating the matter, and to matter so encapsulated. In an important specific application, this invention relates to encapsulating compounds for cable splices. Still more specifically, it relates to encapsulating compounds for splices in multiconductor telecommunications cables, e.g., telephone cables.

Background of the Invention

The need to protect an article, or a part thereof, from a hostile environment exists in many areas of technology and commerce. For instance, it is often necessary to protect electrical equipment or components against contact with water or moisture. A particular example of this is the need to so protect joints or splices between electrical conductors, e.g., splice points between multiconductor communications cables.

A frequently used technique for protecting such splice points comprises providing an enclosure around the completed splice, and introducing a curable or gelable liquid into the enclosure. The liquid should ideally fill all the voids between the conductors and other splice components and form closely adhering interfaces with all the surfaces it contacts within the enclosure, thereby reducing the possibility of water migration along such interfaces, which can result in water contact with conductors or other sensitive splice components.

An encapsulating compound for cable splices and the like should ideally also have other desirable characteristics, such as compatibility with all the materials it contacts, chemical stability over a wide range of operating temperatures, good electrical properties, be reenterable, nonsagging at high temperatures, retain acceptable mechanical properties at low temperatures, be nontoxic to personnel in both the liquid and the cured state, and be acceptable under applicable environmental laws.

Although no prior art encapsulating compound fully possesses all these desirable characteristics, splice encapsulants are in widespread use, in particular, in the telephone industry.

Among the currently most frequently used encapsulant are polyurethane-based material compositions, especially mineral oil extended compositions. For instance, U.S. Patent 4,168,258, issued September 18, 1979 to M. Brauer et al, discloses a cured, cross-linked grease-compatible polyurethane-based material comprising mineral oil and a coupling agent, useful for sealing an insulated electrical device. See also U.S. Patent Re. 30,321.

Similarly, U.S. Patent 4,329,442, issued May 11, 1982 to R.J. Pokorny, discloses a polyurethane prepared from an aliphatic or cycloaliphatic isocyanate, a polydiol, a tri- or tetra-functional aliphatic polyol, a monofunctional aliphatic alcohol, and a catalyst, the composition being useful as an encapsulating compound, said to have good adhesion to greasy insulation material.

U.S. Patent 4,029,626 discloses a polyurethane composition which is cured by mixing a triol and diisocyanate-containing prepolymer with a curing agent that is selected from the class consisting of organic diamines and aminoalkanols. As a consequence of the choice of curing agent the resulting solid contains polyurea linkages. The composition also contains an ester plasticizer and a catalyst, and can have the relatively long curing time of 60 minutes. The plasticizer has a viscosity of not more than about 75 cps (0.075 Pa. s) at 20°C, and contains preferably about 25% b.w. of the prepolymer.

Prior art encapsulants, especially cable splice encapsulants, generally are formulated to have relatively short cure (gel) times. For instance, an encapsulant that has recently become available commercially is said to have a gel time of 20 minutes at 23°C, and a gel time at -18°C of only 35 minutes. The art considers short gel time to be advantageous, since it reduces the time required to complete a splice, and allows speedy job completion.

Prior art encapsulants, which often have initial mixed viscosity in the order of 0.3-1.5 Pa.s (300-1500 cps) (centipoise) at room temperature, tend to have rapidly increasing viscosities, due to their short cure time. This sometimes results in poor penetration of encapsulant into the splice bundle.

Prior art known compounds, useful in rehabilitation of water-logged cable, have very low initial mixed viscosity (e.g., about 0.1 Pa•s (100 cps) at 1.7°C (35°F), about 10 mPa.s (10 cps) at room temperature) and long cure time. See, for instance, U.S. Patent 3,733,426. Such compounds typically are not useful as splice encapsulants, due to their tendency to stress crack polycarbonate.

U.S. Patent A-4,176,239 discloses a method of eliminating water from free spaces of an electrical device or apparatus by forcing into these free spaces an agent comprising a low viscosity solution of urethane precursors that are extended in mineral oil.

Although widely used, prior art cable splice encapsulation systems do not provide fully satisfactory protection against water intrusion into the splice work, and the resulting damage and deterioration of service. As a consequence, there exists a need for a splice system that retains the important advantages of prior art systems while, at the same time, being capable of giving improved protection against water intrusion.

Glossary of Terms

A "cable" herein is an article comprising a multiplicity of elongated bodies, typically metallic bodies (conductors) but including also dielectric bodies of the type used as optical fibers, and further comprising a dielectric sheath surrounding the elongated bodies. It is to be understood that cables typically also comprise other constituents, such as coatings or insulation around the individual fibers or conductors, strength members, metallic shielding, and filling material. Examples of cables according to the definition are multiconductor communication cables, e.g., telephone cables, and so-called distribution wire and service wire used in telephone systems. Further examples are coaxial cables of the type used in CATV systems, power cables, including cable containing power distribution wire or service wire, and optical fiber transmission or distribution cable. Cable containing service wire typically is used to connect a customer to a distribution system, and cable containing distribution wire is typically used to branch a higher-capacity cable. Cable according to the definition can be adapted to be below ground by direct burial or in buried conduit, or to be maintained above ground.

By "curing" or "gelling" of the encapsulant is meant herein a linking process, including crosslinking, resulting in a substantial increase of the viscosity of the encapsulant.

The "cure time" or "gel time" at a given temperature herein is the time required for the viscosity of encapsulant at the temperature to increase from the initial value (typically the value immediately after mixing together all the components) to about 100 Pa.s ($10^5$ cps). All cure times herein are understood to be ± 15 minutes, unless stated differently.

A "prepolymer" is an adduct or reaction intermediate of a polyol and a monomeric isocyanate, in which either component can be in considerable excess of the other.

Unless defined differently herein, all terms herein are intended to have their customary meaning, as defined, for instance, in The Condensed Chemical Dictionary, 10th edition, Van Nostrand Reinhold Company, New York.

According to the present invention, there is provided a combination as defined in claim 1.

This application discloses encapsulants having novel properties that result in improved water intrusion resistance. As discussed above, the prior art teaches that encapsulants of the type used to protect cable splices desirably have a short curing time. We, on the other hand, have found that increased protection of splices against water damage can be obtained with encapsulants having relatively long cure time. Although the inventive encapsulant can be used in prior art splicing systems, it is advantageously used in a forced encapsulation system.

The increased cure time results in more thorough filling of voids and interstices within the splice enclosure (e.g. the elastomer bag of the forced encapsulation system) and the cable ends, leading to improved resistance of the splice system to water intrusion and the thereby caused electrical problems.

The correctness of this novel approach is verified by means of a water instrusion test, to be described later. In this test, splices encapsulated with a prior art encapsulant that is widely used in the telephone industry, having a cure time at 26.7°C (70°F) of 30 minutes, typically failed after about 1-3 days with a 1.524m (5 ft.) water head (cable filled with an oil-extended thermoplastic rubber). In the same test, similar splices encapsulated with the same, but uncatalyzed, encapsulant [cure time at 26.7°C (70°F) about 20-24 hours] typically failed after about 17 days with a 1.524m (5 ft) water head. The improvement in this case clearly is dramatic. Other advantages of the inventive encapsulant will be discussed below.

In a broad sense the inventive composition of matter is a curable material comprising at least one isocyanate, at least one polyol, at least one ester plasticizer, and, optionally, at least one of catalyst, fungicide or antioxidant, the material having a cure time of at least about 50 minutes at 25°C. The invention also comprises the above composition of matter, in combination with matter comprising a splice between at least two cables, the splice enveloped in the encapsulant, and the composition of matter, in combination with matter comprising at least one cable, such as in end caps and cable stubs.

The encapsulant is advantageously used by mixing, at the splice site, the previously prepared components of a two- (or multi-) component preparation, pouring the encapsulant into a splice enclosure, where it cures in situ.

As is well known, polyurethane is produced by the condensation reaction of an isocyanate and a hydroxyl-containing material such as a polyol. The total amounts of isocyanate and of polyol in the uncured encapsulant embodying the invention advantageously are such that the cured encapsulant comprises between about 20% and about 60% polyurethane, preferably between about 30% and 50%, by weight of the cured encapsulant, the balance comprising plasticizers and possibly the optional additive or additives. All compositional percentages herein are intended to be weight percent of the cured encapsulant, unless stated otherwise. The weight fraction of polyurethane is typically chosen to result in a cured encapsulant having appropriate characteristics, including relatively low tear strength, relatively high pull-out strength, good resistance to water intrusion, and compatibility with cable filling compounds and splice components.

Both aliphatic and aromatic isocyanates are useful in the practice of the invention. The average number of -NCO radicals advantageously is from about 1.2 to about 1.0 per hydroxyl radical.

A variety of hydroxyl-terminated materials can be used to practice the invention, including Castor Oil, polyether and polyester polyols, and hydroxyl-terminated polybutadiene (HTPBD). Criteria for selection include low water absorption, hydrolytic stability, and reactivity. A currently preferred polyol is a HTPBD.

The inventive encapsulant also comprises an ester (or combination of esters) plasticizer. A variety of esters can be employed in the practice of the invention, including esters based on phthalic acid and trimellitic acid, as well as esters of adipic acid and similar diacids. An encapsulent comprising 30% to 50% b.w. of polyurethane and 50% to 70% b.w. of ester selected from the group consisting of trimellitates, phthalates, and combinations thereof, is particularly preferred.

As is well known, esters can cause stress cracking of polycarbonates, a material frequently present in cable splices (e.g., in connectors). The likelihood of stress cracking decreases with increasing molecular weight, and therefore viscosity, of the ester. On the other hand, the viscosity of the ester should be relatively low, in order to achieve a relatively low-viscosity encapsulant. Esters having viscosity between 0.05 and 0.5 Pa.s (50 and 500 cps) at $25^0$C are used in the inventive encapsulant.

The weight fraction of esters typically is between about 25% and about 70%, preferably between about 35% and 60%. The amount advantageously present depends, inter alia, on the stress cracking potential, the viscosity and the hydrolytic stability of the ester, and the desired dry heat aging characteristics of the encapsulant. Encapsulants according to the invention are thus regarded as being essentially hydrocarbon oil free, and optionally comprise at least one of catalyst, fungicide, and antioxidant.

An important aspect of the inventive material being its relatively long cure time, the amount of catalyst present is of significance. A widely used catalyst, dibutyl tin dilaurate, has been found to be useful in the practice of the invention. Other known initiators, such as organophosphorous and organoarsenic compounds, are also contemplated. Use of a catalyst is optional, depending, interalia, on the desired cure time. Catalyst-free encapsulants according to the invention, which may, dependent on the amount and type of polyol present, require up to 20 hours and more to cure at room temperature, can form highly water-resistant seals, and such compositions are among the currently preferred ones.

Since long gel times are desirable in material according to the invention, it is in principle not necessary to prepare a prepolymer of the isocyanate component. However, for health and safety considerations, some prereaction may be desirable.

A further aspect of the invention is the typically relatively low mixed initial viscosity of the encapsulant, typically between 0.15 and 1.5 Pa.s (150 and 1500 cps) at $25^0$C. In some preferred compositions this viscosity is about 0.4-0.9 Pa.s (400-900 cps). This relatively low viscosity contributes to thorough penetration of the splice work, and often to some penetration into the cable ends, resulting in good water-intrusion-resistance of the encapsulation. An exemplary encapsulant composition according to the invention thus comprises at least one isocyanate selected from the group consisting of diphenylmethane diisocyanate (MDI), polymeric MDI, and derivatives of MDI, and further comprises at least one polyol selected from the group consisting of hydroxyl-terminated polyisoprene, polyether, and castor oil.

Detailed Description

A significant aspect of the invention is the discovery that the water-intrusion resistance of encapsulated splices typically can be improved by using a liquid encapsulant having relatively long (longer than about 50 minutes at $25^0$C) curing time, while maintaining (or improving upon) the other relevant material properties of the encapsulant. These other properties include initial mixed viscosity, low tear strength and compatibility with all materials present in the splice, including, possibly, preexisting encapsulant in reentered splices. Some relevant aspects of compatibility are: absence of stress cracking, absence of gross materials changes at interfaces (e.g., formation of "oily" interfaces, tackifying of polymeric surfaces), and relatively high pull-out strength of encapsulated (plastic insulated) conductors precoated with cable filling compound.

Compositions embodying the invention are advantageously prepared on site by mixing of two separate

4

previously prepared materials, although all the individual components could be mixed together on site, if so desired.

Typically, although not necessarily, one of the previously prepared materials comprises an isocyanate-terminated prepolymer. The prepolymer can be formed by known methods (see, for instance, U. S. Patent Re. 30,321,) from aliphatic or aromatic isocyanates, or from appropriate derivatives. Aliphatic isocyanates useful in the practice of the invention include hexamethylene diisocyanate (HMDI), isophorone diisocyanate (IPDI), 3-isocyanatemethyl, and 3, 5, 5 trimethylcyclohexyl isocyanate. Such aromatic isocyanates include 4, 4'-diphenylmethane diisocyanate (MDI), and 2, 4-tolylene diisocyanate (TDI). Appropriate derivatives of isocyanates include a polymethylene phenyl isocyanate available from Upjohn Company, LaPorte, Texas, under the trade name PAPI 94, and a polymethylene polyphenyl isocyanate available from Mobay Chemical Corporation, Pittsburgh, Pennsylvania, under the trade name MONDUR MRS-10.

In general, the derivatives comprise aromatic and aliphatic isocyanates substituted with other organic and inorganic groups that do not adversely affect the course of the chain-extending and/or cross-linking reaction. Isocyanates useful in the practice of the invention typically have relatively low average "functionality", between about 2 and about 2.5.

An isocyanate-terminated prepolymer can be prepared by reacting an excess of an appropriate isocyanate with one or more polyols, typically polyol of molecular weight between about 1000 and about 6000. Among the polyols useful in the practice of the invention are those selected from compounds based essentially on HTPBD, hydroxyl-bearing ethers and/or esters, Castor Oil, or combinations thereof. Polyols of the same type can also be used in the second part of a two-part preparation, also referred to herein as the polyol part. Other desirable polyols are hydroxyl-terminated polyisoprene, and combinations of butadiene and/or isoprene with other monomers, such as styrene.

Criteria for selection of polyols comprise low water absorption and appropriate reactivity of the polyol, as well as good hydrolytic stability and flexibility of the encapsulant formed therewith. The currently preferred polyols belong to a family of liquid, hydroxyl terminated polymers of butadiene with a number average molecular weight of about 3000, and degree of polymerization typically in the range of 50, available from ARCO Chemical Company, Philiadelphia, Pennsylvania, under the trade name POLY BD. As is stated in previously referred to U.S. Patent Re30,321, POLY BD has an equivalent weight of approximately 1260.

Polyether and/or polyester polyols are used to reduce the viscosity and to reduce the reactivity. For instance, use of polyols having secondary or tertiary hydroxyls, e.g., polyether diols and triols, reduces the rate of reaction, and delays onset of gelation, relative to a similar system using primary hydroxyl polyols. On the other hand, use of higher molecular weight polyol typically results in higher viscosity of the mixed encapsulant.

Exemplary polyether polyols are propylene oxide adducts of diol starters, propylene oxide adducts of triol starters, ethylene oxide adducts of polyoxypropylene diols, and ethylene oxide adducts of polyoxypropylene triols, all available from Union Carbide Corporation, Danbury, Connecticut, under the trade name NIAX® POLYOLS. Other exemplary polyether polyols are available from Dupont, Wilmington, Delaware, under the trade name TERACOL. These latter substances are polytetramethylene either glycols. TERACOLS have equivalent weight of about 500 and about 950.

Castor Oil is one of the polyols known to the prior art. Although it is advantageously used in prepolymer formation, its exclusive use in the polycol part is currently not preferred. An exemplary Castor Oil is a substance consisting substantially of triglyceride of ricinoleic acid, available from CasChem Corporation, Bayonne, New Jersey under the trade name DB OIL. This polyol has an equivalent weight of about 342.

It will be understood that the liquid encapsulant, or its precursor materials, has to comprise enough isocyanate(s) and polyol(s) to result in a 20-60% b.w. polyurethane content of the cured encapsulant, with the balance being ester plasticizer and, catalyst, fungicide or optionally, at least one of antioxidant. Various ways of achieving this end are possible and known to those skilled in the art, and all these are intended to be within the scope of the invention.

The polyol part of a two-part encapsulant preparation according to the invention typically comprises, in addition to polyol or polyols, one or more nonreacting esters (a plasticizer), synthetic oils, unsaturated oils, and/or mineral oils.

Exemplary esters are listed, for instance, in Technology of Plasticizers, J.K. Sears and J.R. Darby, J. Wiley and Sons, 1982, and include phthalates, trimellitates, high molecular weight adipates, azelates, and succinates, and similar esters which meet the criterion of low stress-cracking activity on polycarbonates. Specific examples are 6-10 trimellitates, available from USS Chemical, Pittsburgh, Pennsylvania, under the trade name PX-336, and ditridecyl phthalates, available from Exxon Corporation, Houston, Texas. Esters typically are about 25-70%, preferably 35-60%, of the encapsulant.

Catalysts for curing polyurethanes are well known and include dibutyl tin dilaurate, available under the

5

designation T-12 from M&T Chemicals, Inc., of Rahway, New Jersey. The amount of catalyst is to be adjusted to result in the desired gel time, no less than about 50 minutes at 25⁰C. The exact amount typically depends on the details of the composition and the desired objective, and its determination may require a minor amount of experimentation. A typical level is 0.06% b.w. of polyol. In an encapsulant comprising about 40% polyurethane, this amount of tin catalyst would result in a cure time of about 60 minutes. It is of course, possible to practice the invention without use of catalyst. The cure time can be adjusted not only by choice of the amount (or type) of catalyst used, but also by proper selection of the proportion of primary or higher polyols with the presence of higher (secondary or tertiary) polyols resulting in longer cure time. However, it is not only the cure time at 25⁰C that is of concern in materials according to the invention, but also the cure times at higher temperatures.

The encapsulant is substantially free of hydrocarbon oils. Furthermore, such compositions comprise between about 50% and about 70% of trimellitate. Some of the trimellitate may be present in the prepolymer part. That part further comprises sufficient MDI isocyanate and Castor Oil such that, together with the HTPBD-based polyol in the polyol part, between about 30% and about 50% of the encapsulant formed from the parts, is polyurethane. Furthermore, preferred compositions have gel times greater than 75 minutes at 25° C, with some preferred compositions being substantially catalyst-free.

The ability of various encapsulants to resist water intrusion into a splice was evaluated by means of a test in which a simulated splice, comprising typically 50 pairs of standard 0.0646cm (22 AWG) plastic insulated conductor, connected by means of a commercially available connector, inserted into a test cell which was then filled with encapsulant, was subjected to water at a controlled pressure, indicated in terms of head of water. The electrical resistance between various combinations of wires (corresponding to ring-ground, tip-ground, and ring-tip in a telephone cable) was monitored, with a drop below $10^9$ Ω considered a failure. Increase in time to failure indicates improved ability to resist water inversion. Table I shows exemplary results of some of these tests and Table II shows compositions of encapsulants used in Table I.

## Table I

### Water Intrusion Test

| line | encapsulant | conductors | water head (m) | (feet) | days to failure |
|---|---|---|---|---|---|
| 1 | D, catalyzed | b | 1.52 | (5) | 134+ |
| 2 | D, catalyzed | a | 1.52 | (5) | 1-3 |
| 3 | D, catalyzed | c | 1.52 | (5) | <1 |
| 4 | D, uncatalyzed | a | 1.52 | (5) | 17 |
| 5 | F, catalyzed | a | 1.52 | (5) | 43 |
| 6 | F, catalyzed, partially reacted | a | 1.52 | (5) | 3 |
| 7 | F-1, catalyzed | a | 1.52 | (5) | 121 |
| 8 | F-1, Catalyzed partially reacted | a | 1.52 | (5) | 1 |
| 9 | N-6XL, catalyzed | a | 1.52 | (5) | 59 |
| 10 | C-1, 1/2 catalyzed | c | 1.52 | (5) | 2 |
| 11 | C-1, uncatalyzed | c | 1.52 | (5) | 35+ |
| 12 | D, catalyzed | b | 2.44 | (8) | <1 |
| 13 | D, uncatalyzed | a | 2.44 | (8) | <3 |
| 14 | F, catalyzed | a | 2.44 | (8) | <5 |
| 15 | F, uncatalyzed | a | 2.44 | (8) | 42+ |
| 16 | F-1, catalyzed | a | 2.44 | (8) | 22 |
| 17 | F-1, uncatalyzed | a | 2.44 | (8) | 69+ |
| 18 | N-6XL, Catalyzed | a | 2.44 | (8) | 14 |
| 19 | F-17B, catalyzed | a | 2.44 | (8) | 1 |
| 20 | F-17B, uncatalyzed | a | 2.44 | (8) | 88+ |
| 21 | F-1, uncatalyzed | a | 3.05 | (10) | 69+ |

## Table II

### Composition of Encapsulants of Table I

| Encap-sulant | Poly-urethane (%) | Ratio prepolymer/ polyol | HTPBD (%) | Poly-ether polyol (%)(c) | Diluents & Plasticizers (%) | | | |
|---|---|---|---|---|---|---|---|---|
| | | | | | (1) | (2) | (3) | (4) |
| D(a) | 34.9 | 17/83 | 32.5 | – | 25.2 | 42.3 | – | – |
| D(b) | 34.9 | 17/83 | 32.5 | – | 25.2 | 42.3 | – | – |
| F | 49.2 | 21.4/78.6 | 51.1 | – | 17.8 | 31.1 | – | – |
| F-1 | 49.0 | 21.2/78.8 | 49.4 | – | 50.6 | – | – | – |
| N-6XL | 45.7 | 19.7/80.3 | 46.4 | – | 45.5 | – | 8.1 | – |
| C-1 | 40.0 | 17.7/82.3 | 40.2 | – | – | – | – | 59.8 |
| F-17B | 50.0 | 82.9/77.1 | 31.2 | 20.6 | 48.2 | – | – | – |

EP 0 185 058 B1

Key to Table I   for compositions, see Table II:

"catalyzed":   gel times 20-40 minutes;

"½ catalyzed":   gel time about 65 minutes;

"uncatalyzed":   gel times about 20 hours;

(all gell times are at room temperature);

conductors "a":   had been in contact with oil extended
thermoplastic rubber filling compound;

conductors "b":   had not been in contact with any filling
compound;

conductors "c":   had been in contact with petroleum jelly
filling compound

days to failure: "+" indicates that test is beyond the
given number of days

Notes:   i)   An isocyanate-terminated Castor-Oil-based polyurethane prepolymer (comprising polymeric MDI, Castor Oil, and dioctyl adipate) available from CasChem, Inc. under the trade name VORITE 715 M-1, was used as the prepolymer part in all compositions listed in Table II.

ii)   The percentage of polyurethane is weight percent of the cured encapsulant, all other percentages are weight percent of the polyol part.

Key to Table II:   a) catalyzed:   a HTPBD-based polyol, available from CasChem, Inc. under the trade name POLYCIN 934-M3, was used. The composition of the polyol was established using IR analysis methods.

b) uncatalyzed:   as in a), except that trade name is POLYCIN 934-M4

c) polyether triol "NIAX" (Registered Trade Mark) LG 56

1) dioctyl adipate

2) white mineral oil, DRAKEOL 35

3) synthetic oil, ISOLENE XL 20097-3

4) 6-10 trimellitate

Table I shows, inter alia, that typically the water intrusion resistance depends on the presence or absence of a filling compound and, where present, on the type of filling compound. Compare, for instance lines 1 and 2, and lines 2 and 3, of Table I. Furthermore, the data shows that typically longer cure times, in excess of about 60 minutes, result in improved water intrusion resistance. See, for instance, lines 2 and 4, 10 and 11, 14 and 15, 16 and 17, and 19 and 20. A further point illustrated by the data is the effect of viscosity and very short gel times. See lines 5 and 6, and 7 and 8. The "partially reacted" compounds were held at room temperature for about 10 minutes after mixing, and then poured. This resulted in high initial viscosity of the encapsulant as poured, as well as in reduced subsequent gel time. The observed effect was a significant reduction in the time to failure. The table also illustrates the sensitivity of time to failure to water pressure. See lines 5 and 14, and 17 and 21. A further significant point illustrated by the data is the effect of composition, in particular, of diluent content, on water intrusion resistance. See lines 2 and 5, and 11 and 13. The beneficial effect of mineral oil elimination is also apparent. See lines 5 and 7, and 14 and 16.

Bonding of encapsulant to insulated conductors is measured by means of a pull-out test. A predetermined length of conductor [11.4cm (4.5 inches)] is embedded in encapsulant and pulled out (at a rate of 50 mm/minute) on a standard tensile test machine (Instron). Increase in pull-out force indicates improved adhesion of the encapsulant to the insulation. In order to get results representative of actual conditions, wires removed from actual cables (air core, petroleum jelly filled, and oil-extended thermoplastic-filled) were used. Exemplary results are shown in Table III.

## Table III

### Pull-Out Test

| line | encapsulant | conductors | pull-out load | |
|---|---|---|---|---|
| | | | N | (lb.) |
| 1 | D, catalyzed | a | 10.68 | (2.4) |
| 2 | D, catalyzed | b | 32.92 | (7.4) |
| 3 | F, uncatalyzed | a | 16.46 | (3.7) |
| 4 | F-1, uncatalyzed | a | 19.57 | (4.4) |
| 5 | C-1, uncatalyzed | a | 45.37 | (10.2) |
| 6 | C-1, uncatalyzed | b | 58.27 | (13.1) |
| 7 | C-1, uncatalyzed | c | 11.12 | (2.5) |
| 8 | C-1, 1/2 catalyzed | a | 56.05 | (12.6) |
| 9 | C-1, 1/2 catalyzed | c | 13.34 | (3.0) |

Note: see keys to Tables I and II for explanation.

The data of Table III shows, inter alia, the effect of insulator contamination on pull-out strength, with clean (unfilled cable) conductors tending to have higher strength. See lines 1 and 2, and 6 and 7. Furthermore, the type of filling compound is shown to be important. See lines 9 and 10. The results also indicate that long cure time does not have a significant effect on the pull-out strength. This suggests that the improved water intrusion resistance of encapsulants according to the invention is due to their low viscosity and long cure time. Desirably, encapsulants according to the invention have pull-out strength (as measured by the above-described test) of at least about 17.79N (4 lb.) for 0.0646cm (22 AWG) plastic insulated wires whose insulation is treated with oil-extended thermoplastic, and of at least about 8.90N (2 lb.) for such wires whose insulation is treated with petroleum jelly.

Although the preferred application of compositions of matter according to the invention is as cable splice encapsulant, these compositions can typically also be employed for making pressure plugs in cables, preferably in filled telecommunications cables. In this application the inventive composition is typically injected under pressure into the cable and allowed to cure in situ. This procedure does typically require no further preparatory steps, and results in pressure plugs that permit splicing of unpressurized cable to pressurized cable.

Other possible uses of the invention composition are as encapsulant in cable end caps, as encapsulant in cable restoration, and as filling compound in cable stubs. End caps are used to protect a cable termination, e.g., the termination of a telephone distribution cable. Plastic insulation is subject to deterioration in some environments, and such cables can be restored by removing the portion containing the cracked insulation, splicing a cable stub to the virgin conductor, and encapsulating the splice. Cable stubs are short lengths of cable that may attached to equipment such as terminals or repeater housings.

The following examples are intended to further illustrate the practice of the invention, in particular, the synthesis of encapsulants according to the invention.

Example 1: A prepolymer was prepared, substantially as described in U. S. Patent Re. 30,321, Example XIII. The reactants and their amounts were also as given in that example. A polyol mixture was prepared by mixing 40.2 parts b.w. hydroxyl-terminated polybutadiene (POLY BD) with 59.8 parts normal alkyl trimellitate (6-10 TM) until homogeneously dispersed, with a resulting viscosity of about 0.896 Pa•s (896 cps) at 23.9° C (75° F). Mixing 17.7 parts by weight prepolymer with 82.3 parts of polyol mixture (NCO/hydroxyl ratio of about 1.15, in this and all subsequent examples) resulted in encapsulant having a gel time of about 20 hours, relatively low tear strength [4.99N/cm (2.85 lb/inch) width], and good water intrusion resistance (see line 11 of Table I).

Example 2: A prepolymer of the same composition as in Example 1 was prepared substantially as in Example 1, except that the prepolymer was prepared at room temperature, without any heating step. The polyol mixture had the same composition as the mixture of Example 1. The encapsulant resulting from mixing of the two components had properties substantial as the material of Example 1.

Example 3: A prepolymer is prepared by a procedure substantially as described in U. S. Patent Re. 30,321, Example XIII, except that polymeric MDI is replaced by IPDI, and that the following percentages of materials are used: 25.6% IPDI, 14.9% Castor Oil, and 59.5% dioctyl adipate. All percentages are by weight of prepolymer. A polyol is prepared by mixing 40.2% POLY BD and 59.8% 6-10 trimellitate. Mixing the prepolymer and the polyol results in an encapsulant having a polyurethane content of 40% b.w. and a cure time of about 20 hours.

For the examples below VORITE 715 M-1 was used. See Notes to Table II.

Example 4: A polyol mixture was prepared as in Example 1, and encapsulant formed by mixing 17.7 parts of the commercial prepolymer with 82.3 parts of the polyol mixture. The properties of the resulting encapsulant were substantially the same as those described in Example 1.

Example 5: A polyol mixture was prepared by mixing 49.4 parts of HTPBD with 50.6 parts of dioctyl adipate. The viscosity of the resulting material was about 0.577 Pa•s (577 cps) at 23.9° C (75° F). Mixing 21.2 parts of the commercial prepolymer with 78.8 parts of the polyol mixture resulted in an encapsulant with a gel time of about 20 hours.

Example 6: 22.9 parts of the commercial prepolymer is mixed with 77.1 parts of a polyol mixture formed by blending HTPBD with a polyether polyol ("NIAX®"LG56) in a weight ratio 1.86:1 and dioctyl adipate, for a total polyurethane content of the encapsulant of 50% b.w. The polyol mixture had a viscosity of 0.348 Pa•s (348 cps) at 23.9° C (75° F). The encapsulant had a cure time in excess of 20 hours, and showed good water intrusion resistance. See line 20 of Table I.

## Claims

1. In combination:

    a) at least a first cable comprising a tubular dielectric sheath enveloping a multiplicity of elongate metal bodies, at least some of the metal bodies extending longitudinally beyond an end of the tubular sheath; and

    b) encapsulant enveloping at least a part of the metal bodies extending beyond the end of the sheath, the encapsulant being substantially hydrocarbon oil free and formed from a curable liquid having relatively long cure time of at least about 50 minutes at 25°C, the encapsulant comprising between 20% and 60% polyurethane, all percentages being by weight of the encapsulant, the polyurethane formed from at least one isocyanate and at least one polyol, with the balance consisting of ester plasticizer having viscosity within a range of from 0.05 to 0.5Pa•s at 25° C and, optionally, at least one of catalyst, fungicide or antioxidant.

2. Combination of claim 1 further comprising at least a second cable and a splice between the first and the second cable, the splice enveloped in the encapsulant.

3. Combination of claim 1, wherein the curable liquid is formed by mixing together at least two prepared parts, at least one of the parts comprising an isocyanate prepolymer, the liquid having a viscosity at completion of mixing of the parts, this viscosity to be referred to as the "initial mixed viscosity", the initial mixed viscosity being between 0.15 and 1.5 Pa·s at 25°C.

4. Combination of claim 3, wherein the curable liquid has an initial mixed viscosity of at least 0.4Pa·s at 25°C.

5. Combination of claim 1, wherein the isocyanate is selected from the group consisting of diphenylmethane diisocyanate (MDI), polymeric MDI, and derivatives of MDI.

6. Combination of claim 1, wherein the polyol is selected from the group consisting of hydroxyl-terminated polybutadiene, polyether, castor oil, and combinations thereof.

7. Combination of claim 1, wherein the curable liquid comprises ester plasticizer chosen from the group consisting of trimellitates, phthalates, azelates, and succinates, high molecular weight adipates, and combinations thereof.

8. Combination of claim 1, wherein the curable liquid comprises ester plasticizer chosen from the group consisting of 6-10 trimellitate, ditridecyl phthalate, and dioctyl adipate, and combination thereof.

9. Combination of claim 1, wherein the encapsulant substantially consists of 30% to 50% b.w. of polyurethane and 50% to 70% b.w. of ester selected from the group consisting of trimellitates, phthalates, and combinations thereof.

10. The combination of claim 1, wherein the at least one isocyanate is selected from the group consisting of diphenylmethane diisocyante (MDI), polymeric MDI, and derivates of MDI, and the at least one polyol is selected from the group consisting of hydroxyl-terminated polyibutadiene, polyether, and castor oil.

11. Combination of claim 1, wherein the combination forms part of a cable termination.

12. Combination of claim 1, wherein the combination further comprises a cable stub spliced to the first cable.

13. Combination of claim 1, wherein the cable is a multiconductor telecommunications cable.

14. Combination of claim 1, wherein the encapsulant has a pull-out strength, for 0.0646 cm diameter (22 AWG) plastic-insulated wire coated with oil-extended thermoplastic rubber, of at least 17.8N, as determined by embedding a 11.4 cm length of substantially straight wire in a mass of the liquid, curing the liquid, and pulling the embedded wire from the cured encapsulant at a pull rate of 50 mm/minute.

15. Combination of claim 6, wherein the encapsulant has a pull-out strength, for 0.0646 cm diameter (22 AWG) plastic-insulated wire coated with petroleum jelly, of at least 8.9N, as determined by embedding a 11.4 cm length of substantially straight wire in a mass of the liquid, curing the liquid, and pulling the embedded wire from the encapsulant at a pull rate of 50 mm/minute.

**Revendications**

1. En combinaison :
   a) au moins un premier câble comprenant une gaine diélectrique tubulaire enveloppant un grand nombre d'éléments métalliques allongés, certains au moins des éléments métalliques s'étendant longitudinalement au-delà d'une extrémité de la gaine tubulaire; et
   b) une matière d'encapsulation, enveloppant au moins une partie des éléments métalliques qui s'étendent au-delà de l'extrémité de la gaine, la matière d'encapsulation ne comprenant pratiquement pas d'huile à base d'hydrocarbure, et étant formée à partir d'un liquide durcissable ayant une durée de durcissement relativement longue, d'au moins environ 50 minutes à 25°C, et cette matière d'encapsulation comprenant entre 20% et 60% de polyuréthane, tous les pourcentages étant exprimés en poids de la matière d'encapsulation, le polyuréthane étant formé à partir d'au moins un isocyanate et d'au moins un polyol, le reste consistant en un plastifiant du type ester, ayant une viscosité dans une plage allant de 0,05 à 0,5 Pa.s à 25°C, et comprenant facultativement au moins

12

une substance parmi un catalyseur, un fongicide ou un antioxydant.

2. Combinaison selon la revendication 1, comprenant en outre au moins un second câble et une épissure entre les premier et second câbles, l'épissure étant enveloppée par la matière d'encapsulation.

3. Combinaison selon la revendication 1, dans laquelle le liquide durcissable est formé en mélangeant ensemble au moins deux composants préparés, l'un au moins des composants consistant en un prépolymère d'isocyanate, le liquide ayant à l'achèvement du mélange une certaine viscosité qu'on appelle la "viscosité initiale après mélange", cette viscosité initiale après mélange étant comprise entre 0,15 et 1,5 Pa.s à 25°C.

4. Combinaison selon la revendication 3, dans laquelle le liquide durcissable a une viscosité initiale après mélange d'au moins 0,4 Pa.s à 25°C.

5. Combinaison selon la revendication 1, dans laquelle l'isocyanate est sélectionné dans le groupe qui comprend le diisocyanate de diphénylméthane (ou MDI), le MDI à l'état de polymère, et des dérivés de MDI.

6. Combinaison selon la revendication 1, dans laquelle le polyol est sélectionné dans le groupe comprenant le polybutadiène avec terminaison hydroxyle, un polyéther, l'huile de ricin, et des combinaisons de ces substances.

7. Combinaison selon la revendication 1, dans laquelle le liquide durcissable comprend un plastifiant du type ester choisi dans le groupe constitué par des trimellitates, des phtalates, des azélates et des succinates, des adipates à masse méloculaire élevée, et des combinaisons de ces substances.

8. Combinaison selon la revendication 1, dans laquelle le liquide durcissable comprend un plastifiant du type ester choisi dans le groupe comprenant le 6-10 trimellitate, le phtalate de ditridécyle, l'adipate de dioctyle et une combinaison de ces substances.

9. Combinaison selon la revendication 1, dans laquelle la matière d'encapsulation comprend pratiquement de 30% à 50% en poids de polyuréthane et 50% à 70% en poids d'un ester sélectionné dans le groupe comprenant des trimellitates, des phtalates et des combinaisons de ceux-ci.

10. Combinaison selon la revendication 1, dans laquelle le ou les isocyanates sont sélectionnés dans le groupe comprenant le diisocyante de diphénylméthane (ou MDI), le MDI sous forme de polymère, et des dérivés de MDI, et le ou les polyols sont sélectionnés dans le groupe comprenant le polybutadiène avec une terminaison hydroxyle, un polyéther et l'huile de ricin.

11. Combinaison selon la revendication 1, cette combinaison faisant partie d'une terminaison de câble.

12. Combinaison selon la revendication 1, cette combinaison comprenant en outre une section de câble reliée au premier câble par une épissure.

13. Combinaison selon la revendication 1, dans laquelle le câble est un câble de télécommunication multiconducteur.

14. Combinaison selon la revendication 1, dans laquelle la matière d'encapsulation a une résistance mécanique à l'arrachement d'au moins 17,8 N, pour un fil à isolant plastique de 0,0646 cm de diamètre (22 AWG), revêtu de caoutchouc thermoplastique étendu avec une huile, cette résistance étant déterminée en immergeant dans une masse du liquide une longueur de 11,4 cm de fil pratiquement rectiligne, en durcissant le liquide et en tirant hors de la matière d'encapsulation durcie le fil encastré dans cette dernière, avec une vitesse de traction de 50 mm/minute.

15. Combinaison selon la revendication 6, dans laquelle la matière d'encapsulation a une résistance mécanique à l'arrachement d'au moins 8,9 N, pour un fil à isolant plastique de 0,0646 cm de diamètre (22 AWG), revêtu de pétrolatum, cette résistance étant déterminée en immergeant dans une masse du liquide une longueur de 11,4 cm de fil pratiquement rectiligne, en durcissant le liquide et en tirant hors de la matière d'encapsulation le fil qui est encastré dans cette dernière, avec une vitesse de traction de 50 mm/minute.

**Patentansprüche**

1. Kombination aus

   a) mindestens einem ersten Kabel, das eine rohrförmige dielektrische Hülle aufweist, die eine Mehrzahl von länglichen metallischen Körpern umhüllt, wobei mindestens einige der metallischen Körper sich in Längsrichtung jenseits eines Endes der rohrförmigen Hülle erstrecken, und

   b) Einbettungsmaterial, welches mindestens einen Teil der metallischen Körper umhüllt, die sich bis jenseits des Endes der Hülle erstrecken, wobei das Einkapselungsmaterial im wesentlichen von Kohlenwasserstofföl frei ist und aus einer aushärtenden Flüssigkeit gebildet wird, die eine relativ lange Aushärtzeit von mindestens ungefähr 50 Minuten bei 25° C aufweist, das Einkapselungsmaterial zwischen 20 und 60 % Polyurethan, bezogen auf das Gewicht des Einkapselungsmaterials aufweist, das Polyurethan aus mindestens einem Isocyanat und mindestens einem Polyol gebildet wird und der Rest aus einem Esterplastifizierer besteht, der eine Viskosität innerhalb eines Bereichs von 0,05 bis 0,5 Pa.s bei 25° C besitzt und gegebenenfalls mindestens einen Katalysator, ein Fungizid oder ein Antioxidant enthält.

2. Kombination nach Anspruch 1,
   enthaltend mindestens ein zweites Kabel und eine Verspleißung zwischen dem ersten und zweiten Kabel, wobei die Verspleißung in dem Einkapselungsmaterial eingehüllt ist.

3. Kombination nach Anspruch 1,
   dadurch gekennzeichnet, daß die aushärtbare Flüssigkeit durch Zusammenmischen von mindestens zwei vorbereiteten Teilen gebildet wird, wobei mindestens einer der Teile ein Isocyanatprepolymer aufweist und die Flüssigkeit eine Viskosität am Ende des Mischens der Teile, als "ursprüngliche Mischungsviskosität" bezeichnet, zwischen 0,15 und 1,5 Pa.s bei 25° C aufweist.

4. Kombination nach Anspruch 3,
   dadurch gekennzeichnet, daß die aushärtbare Flüssigkeit eine ursprüngliche Mischungsviskosität von mindestens 0,4 Pa.s bei 25° C aufweist.

5. Kombination nach Anspruch 1,
   dadurch gekennzeichnet, daß das Isocyanat aus der Gruppe bestehend aus Diphenylmethandiisocyanat (MDI), polymerisches MDI und Derivaten von MDI ausgewählt ist.

6. Kombination nach Anspruch 1,
   dadurch gekennzeichnet, daß das Polyol aus der Gruppe bestehend aus mit Hydroxyl endigendem Polybutadien, Polyäther, Castoröl (Rizinusöl) und Kombinationen hiervon besteht.

7. Kombination nach Anspruch 1,
   dadurch gekennzeichnet, daß die aushärtbare Flüssigkeit Esterplastifiziermittel aufweist, die aus der Gruppe bestehend aus Trimellitate, Phthalate, Azelate und Succinate, Adipate mit hohem Molekulargewicht und Kombinationen hiervon ausgewählt sind.

8. Kombination nach Anspruch 1,
   dadurch gekennzeichnet, daß die aushärtbare Flüssigkeit Esterplastifiziermittel aufweist, die aus der Gruppe bestehend aus 6-10 Trimellitat, Ditridecylphthalat und Dioctyladipat sowie Kombinationen hiervon ausgewählt sind.

9. Kombination nach Anspruch 1,
   dadurch gekennzeichnet, daß das Einkapselungsmaterial im wesentlichen aus 30 bis 50 Gew.% Polyurethan und 50 bis 70 Gew.% Ester besteht, das aus der Gruppe bestehend aus Trimellitaten, Phthalate und Kombinationen hiervon ausgewählt ist.

10. Kombination nach Anspruch 1,
    dadurch gekennzeichnet, daß mindestens ein Isocyanat aus der Gruppe bestehend aus Diphenylmethandiisocyanat (MDI), polymerisches MDI und Derivaten von MDI ausgewählt ist und daß mindestens das eine Polyol aus der Gruppe bestehend aus mit Hydroxyl endigendem Polybutadien, Polyäther und Castoröl ausgewählt ist.

11. Kombination nach Anspruch 1,
dadurch gekennzeichnet, daß die Kombination Teil eines Kabelendes bildet.

12. Kombination nach Anspruch 1,
dadurch gekennzeichnet, daß die Kombination weiter einen Kabelstumpf aufweist, der mit dem ersten Kabel verspleißt ist.

13. Kombination nach Anspruch 1,
dadurch gekennzeichnet, daß das Kabel ein vieladriges Telekommunikationskabel ist.

14. Kombination nach Anspruch 1,
dadurch gekennzeichnet, daß das Einkapselungsmaterial für einen kunststoffisolierten Draht von 0,0646 cm Durchmesser (22 AWG), ummantelt mit einem mit Öl gestreckten thermoplastischen Gummi, eine Zugkraft von mindestens 17,8 N aufweist, was wie folgt bestimmt wird: Einbetten eines 1,4 cm langen und im wesentlichen geraden Drahtstücks in einer Masse von Flüssigkeit, Aushärten lassen der Flüssigkeit und Ziehen des eingebetteten Drahtes vom ausgehärteten Einkapselungsmaterial mit einer Zuggeschwindigkeit von 50 mm/Min..

15. Kombination nach Anspruch 6,
dadurch gekennzeichnet, daß das Einkapselungsmaterial für einen kunststoffisolierten Draht von 0,0646 cm Durchmesser (22 AWG), der mit einer Petroleumgallerte beschichtet ist, eine Zugkraft von mindestens 8,9 N aufweist, was wie folgt bestimmt wird: Einbetten eines 11,4 cm langen, im wesentlichen geraden Drahtstücks in einer Masse von Flüssigkeit, Aushärten lassen der Flüssigkeit und Ziehen des eingebetteten Drahts vom Einkapselungsmaterial mit einer Zuggeschwindigkeit von 55 mm/Min..